# EUROPEAN PATENT APPLICATION

(11) **EP 4 307 067 A1**
(43) Date of publication of application: **17.01.2024**
(21) Application number: 22767256.5
(22) Date of filing: 11.03.2022
(51) Int. Cl.: G05B 23/02, G05B 19/418, G06Q 50/04

(54) **INFORMATION PROCESSING SYSTEM AND INFORMATION PROCESSING SYSTEM CONTROL METHOD**

(30) Priority: 12.03.2021 JP 2021040321
(71) Applicant: OMRON Corporation, Kyoto 600-8530 (JP)
(72) Inventor: UEKI, Takuya, Kyoto-shi, Kyoto 600-8530 (JP); TSUGE, Kenta, Kyoto-shi, Kyoto 600-8530 (JP); TESHIMA, Chieko, Kyoto-shi, Kyoto 600-8530 (JP); OKURA, Takafumi, Kyoto-shi, Kyoto 600-8530 (JP); DATE, Taiki, Kyoto-shi, Kyoto 600-8530 (JP); NAGATA, Yuta, Kyoto-shi, Kyoto 600-8530 (JP)
(74) Representative: Mewburn Ellis LLP
(86) International application number: PCT/JP2022/010760
(87) International publication number: WO 2022/191302

(57) **Abstract**

An information processing system includes a first acquisition unit configured to acquire first information indicating a state of a control system including a control device in response to an occurrence of a request or an event related to an abnormality that has occurred in the control system, an abnormality detail determination unit configured to determine details of the abnormality that has occurred on the basis of the first information, a second acquisition unit configured to request, in accordance with the details of the abnormality, a user to provide second information and acquire the second information from the user, a cause conjecture unit configured to conjecture a cause of the abnormality that has occurred on the basis of the first information and the second information, and a notification means configured to notify the user of the conjectured cause of the abnormality.

## Description

### TECHNICAL FIELD

The present disclosure relates to an information processing system and an information processing system control method.

### BACKGROUND ART

Conventionally, in a case where a plurality of abnormalities (troubles, errors, or the like) occur in a production facility constituting a production line, it is necessary to appropriately assign a worker to each abnormality (specifically, work to handle each abnormality) in order to quickly recover from these abnormalities. Japanese Patent Laying-Open No. 2020-129161 (PTL 1) discloses a method for managing the progress of each worker.

On the other hand, the worker operates devices constituting a control system such as a production line to acquire information necessary to identify an abnormality. In addition, it is necessary to understand the details of the abnormality and a measure to eliminate the abnormality by consulting a manual or making an inquiry to a person in charge of the manufacturer, and it takes time to understand the correct measure by consulting the manual of the devices or making an inquiry to the person in charge of the manufacturer.

### CITATION LIST

### PATENT LITERATURE

PTL 1: Japanese Patent Laying-Open No. 2020-129161

### SUMMARY OF INVENTION

### TECHNICAL PROBLEM

It is therefore an object of the present disclosure to provide an information processing system that allows a worker to acquire, at an early stage, a cause of an abnormality that has occurred in a control system.

### SOLUTION TO PROBLEM

An information processing system according to an example of the present disclosure includes a first acquisition unit configured to acquire first information indicating a state of a control system including a control device in response to an occurrence of a request or an event related to an abnormality that has occurred in the control system, an abnormality detail determination unit configured to determine details of the abnormality that has occurred on the basis of the first information, a second acquisition unit configured to request, in accordance with the details of the abnormality, a user to provide second information and acquire the second information from the user, a cause conjecture unit configured to conjecture a cause of the abnormality that has occurred on the basis of the first information and the second information, and a notification means configured to notify the user of the conjectured cause of the abnormality. This configuration allows a worker to acquire, at an early stage, the cause of the abnormality that has occurred in the control system.

The first acquisition unit is communicatively connected to the control system and acquires data stored in the control system. This configuration allows the information processing system to acquire the data from the control system.

The first acquisition unit acquires the data in a case where a predetermined condition is satisfied. This configuration allows the processing to start in a case where the predetermined condition is satisfied.

The first acquisition unit acquires the first information in accordance with an instruction from the user. This configuration allows the processing to start in accordance with the instruction from the user.

The information processing system further includes a confirmation unit configured to confirm with the user whether or not the abnormality has been eliminated. This configuration makes it possible to confirm, by the confirmation unit, whether or not the abnormality has been eliminated.

The information processing system further includes an additional information acquisition unit configured to request the user to provide additional information and acquire the additional information from the user in a case where it is determined that the abnormality has not been eliminated on the basis of a result of the confirmation made by the confirmation unit. The cause conjecture unit narrows down and conjectures the cause of the abnormality on the basis of the first information, the second information, and the additional information. This configuration makes it possible to narrow down, in a case where the abnormality has not been eliminated, the cause of the abnormality on the basis of the additional information.

The second information is imaging data. This configuration makes it possible to acquire the cause of the abnormality at an early stage using the imaging data.

The information processing system further includes an administrator communication unit configured to provide notification to an administrator and control communication between the administrator and the user in a case where it is determined that the abnormality has not been eliminated on the basis of a result of the confirmation made by the confirmation unit. With this configuration, since the administrator and the user can communicate with each other, it is possible to acquire the cause of the abnormality at an early stage.

The cause conjecture unit includes a database used for conjecturing the cause of the abnormality. The information processing system further includes an administrator input reception unit configured to update the database in accordance with input from the administrator. With this configuration, since the database is updated in accordance with the input from the administrator, it is possible to acquire, at an early stage, a cause of an abnormality corresponding to a new event.

An information processing system control method according to an example of the present disclosure includes acquiring first information indicating a state of a control system including a control device in response to an occurrence of a request or an event related to an abnormality that has occurred in the control system, determining details of the abnormality that has occurred on a basis of the first information, requesting, in accordance with the details of the abnormality, a user to provide second information and acquiring the second information from the user, conjecturing a cause of the abnormality that has occurred on a basis of the first information and the second information, and notifying the user of the conjectured cause of the abnormality. This configuration allows a worker to acquire, at an early stage, the cause of the abnormality that has occurred in the control system.

### ADVANTAGEOUS EFFECTS OF INVENTION

The information processing system and the information processing system control method according to an aspect of the present disclosure allows a worker to acquire, at an early stage, the cause of the abnormality that has occurred in the control system.

### BRIEF DESCRIPTION OF DRAWINGS

Fig. 1 is a diagram schematically illustrating an example of a scene of how to use an information processing system 1 according to an embodiment.
Fig. 2 is a diagram schematically illustrating an example of a hardware configuration of a support device 10 according to the embodiment.
Fig. 3 is a diagram schematically illustrating an example of a hardware configuration of a PLC 2 according to the embodiment.
Fig. 4 is a diagram schematically illustrating an example of a hardware configuration of a server 50 according to the embodiment.
Fig. 5 is a diagram schematically illustrating an example of a software configuration of server 50 according to the embodiment.
Fig. 6 is a sequence diagram for describing a data flow between a user and a Bot according to the embodiment.
Fig. 7 is a diagram of an example (part 1) for describing a chat screen 300 according to the embodiment.
Fig. 8 is a diagram of an example (part 2) for describing chat screen 300 according to the embodiment.
Fig. 9 is a sequence diagram for describing a data flow between the user and the Bot according to a first modification of the embodiment.
Fig. 10 is a diagram for describing an example of image data of a communication unit according to the first modification of the embodiment.
Fig. 11 is a diagram for describing a layout configuration of a thermocouple input unit according to a second modification of the embodiment.
Fig. 12 is a diagram for describing a state of a photoelectric sensor according to a third modification of the embodiment.
Fig. 13 is a diagram for describing a state of a CPU unit according to a fourth modification of the embodiment.
Fig. 14 is a diagram schematically illustrating an example of a scene of how to use an information processing system 1# according to a fifth modification of the embodiment.
Fig. 15 is a diagram schematically illustrating an example of a scene of how to use an information processing system 1P according to a seventh modification of the embodiment.
Fig. 16 is a diagram schematically illustrating an example of a hardware configuration of a support device 60 according to the seventh modification of the embodiment.
Fig. 17 is a diagram schematically illustrating an example of a software configuration of a server 50P according to the seventh modification of the embodiment.
Fig. 18 is a sequence diagram for describing a data flow among the user, the Bot, and an administrator according to the seventh modification of the embodiment.
Fig. 19 is a diagram of an example (part 3) for describing a chat screen 500 according to the seventh modification of the embodiment.
Fig. 20 is a diagram for describing a database managed by a cause conjecture unit 114 of server 50P.
Fig. 21 is a diagram of an example (part 4) for describing a chat screen 600 according to the seventh modification of the embodiment.

### DESCRIPTION OF EMBODIMENTS

An embodiment of the present disclosure will be described in detail with reference to the drawings. Note that the same or corresponding parts in the drawings are denoted by the same reference numerals, and no redundant description will be given of such parts.

### <A. Application example>

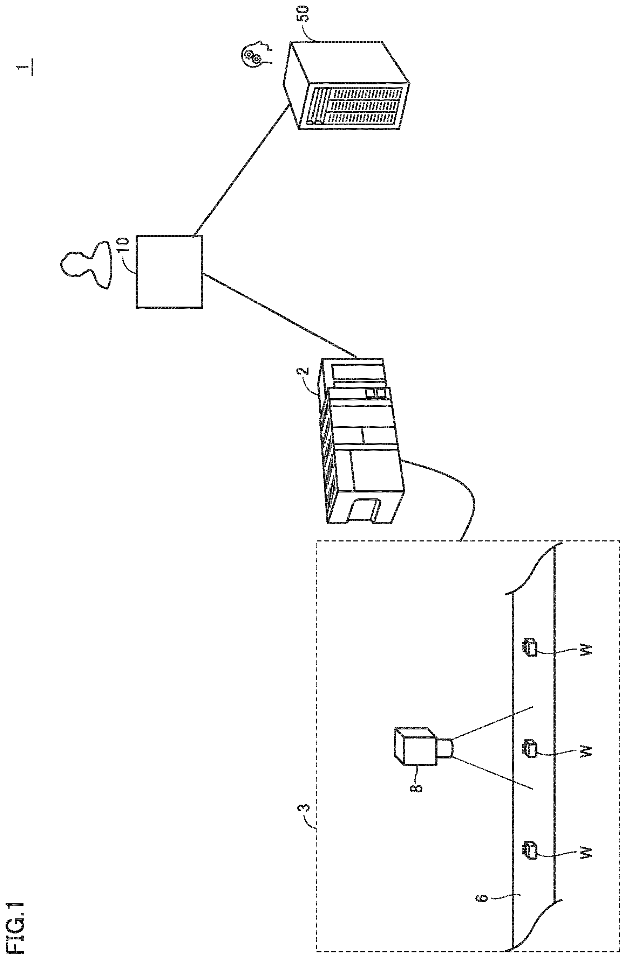

Fig. 1 is a diagram schematically illustrating an example of a scene of how to use an information processing system 1 according to the embodiment. As illustrated in Fig. 1, information processing system 1 according to the embodiment includes a production line 3, a programmable logic controller (PLC) 2, a support device 10, and a server 50.

Workpieces W are conveyed by a conveyance mechanism 6 such as a belt conveyor, and sequentially imaged by an imaging unit 8. As an example, the imaging result is used for image processing such as inspection for a flaw or dirt on each workpiece W, measurement of the size and orientation of workpiece W, and recognition of a character or figure on the surface of workpiece W. PLC 2 controls production line 3 including a plurality of mechanisms such as imaging unit 8 and conveyance mechanism 6. PLC 2 includes a control program 221 for controlling the operation of production line 3. Control program 221 may include any type of program that controls the operation of each mechanism constituting production line 3. Control program 221 may include one program or a plurality of programs.

PLC 2 acquires a plurality of pieces of state data 222 and log data 223 on the states of the plurality of mechanisms constituting production line 3. Production line 3 may be constituted of a plurality of devices or may be constituted of one device such as a packaging machine as long as production line 3 is capable of producing some object. Further, each mechanism may be constituted of one or a plurality of devices or may be constituted of a part of a device as long as the mechanism is capable of performing some processing in a production process. In a case where each mechanism is constituted of a part of a device, the plurality of mechanisms may be constituted of one device.

Support device 10 is connected to PLC 2, and acquires information (first information) indicating the state of production line 3, the information being held by PLC 2, in response to the occurrence of a request or an event related to an abnormality that has occurred in production line 3. As an example, the information is state data 222 or log data 223 of each mechanism constituting production line 3.

Support device 10 is communicatively connected to server 50. Server 50 acts as a chatbot in the embodiment.

A user uses support device 10 to access server 50 acting as a chatbot, and provides necessary information in response to a request from server 50. Server 50 determines details of the abnormality that has occurred on the basis of the acquired information (first information). Then, server 50 requests the user to provide other information (second information) in accordance with the determined details of the abnormality, and acquires the other information (second information) from the user. Server 50 conjectures a cause of the abnormality that has occurred on the basis of the acquired information (first information) and the requested other information (second information). Server 50 notifies support device 10 of the conjectured cause of the abnormality.

The user performs a procedure for eliminating the abnormality on the basis of the conjectured cause of the abnormality notified from server 50.

The user conventionally understands the cause of the abnormality by consulting a manual or making an inquiry to a person in charge of the manufacturer, which requires a considerable time, but the user can understand the cause of the abnormality at an early stage by accessing server 50 acting as a chatbot. That is, the information processing system according to the embodiment allows the user to acquire, at an early stage, the cause of the abnormality that has occurred in the control system.

### <B. Hardware configuration of support device>

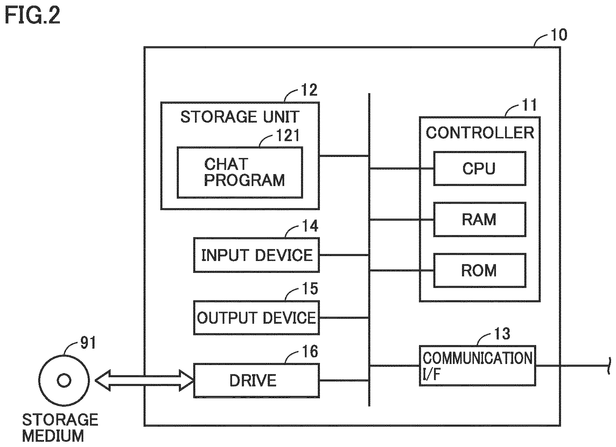

Fig. 2 is a diagram schematically illustrating an example of a hardware configuration of support device 10 according to the embodiment. As illustrated in Fig. 2, support device 10 according to the embodiment is a computer in which a controller 11, a storage unit 12, a communication interface 13, an input device 14, an output device 15, and a drive 16 electrically connected to each other. Note that, in Fig. 2, the communication interface is referred to as "communication I/F".

Controller 11 includes a central processing unit (CPU) that is a hardware processor, a random access memory (RAM), a read only memory (ROM), and the like, and controls each component in accordance with information processing. Storage unit 12 is, for example, a secondary storage device such as a hard disk drive or a solid state drive, and stores a chat program 121 and the like to be executed by controller 11.

Chat program 121 is a program that accesses server 50 acting as a chatbot and provides an interface screen and the like for exchanging information with server 50.

Communication interface 13 is, for example, a wired local area network (LAN) module, a wireless LAN module, or the like, and is an interface for performing wired or wireless communication over a network. Communication interface 13 allows support device 10 to perform data communication with PLC 2 over the network. Note that the type of the network may be selected as appropriate from, for example, the Internet, a wireless communication network, a mobile communication network, a telephone network, a private network, and the like.

Input device 14 is, for example, a device for performing input, such as a mouse or a keyboard. Furthermore, output device 15 is, for example, a device for performing output, such as a display or a speaker. The user (operator) can operate support device 10 via input device 14 and output device 15.

Drive 16 is, for example, a CD drive, a DVD drive, or the like, and is a drive device for reading a program stored in a storage medium 91. The type of drive 16 may be selected as appropriate in accordance with the type of storage medium 91. Chat program 121 described above may be stored in storage medium 91.

Storage medium 91 is a medium that stores information such as a program by electrical, magnetic, optical, mechanical, or chemical action so as to allow a computer, another device, a machine, and the like to read the stored information such as a program. Support device 10 may acquire chat program 121 described above from storage medium 91.

Here, in Fig. 2, a disc-type storage medium such as a CD or a DVD is illustrated as an example of storage medium 91. The type of storage medium 91, however, is not limited to the disc type, and may be other than the disc type. Examples of the storage medium other than the disc type include a semiconductor memory such as a flash memory.

Note that, regarding a specific hardware configuration of support device 10, it is possible to omit, replace, and add a component as appropriate according to the embodiment. For example, controller 11 may include a plurality of processors. Support device 10 may include a plurality of information processing devices. Further, support device 10 may be an information processing device designed specifically for a service to be provided, or alternatively, may be a general-purpose server device, a personal computer (PC), or the like.

### <C. Hardware configuration of PLC>

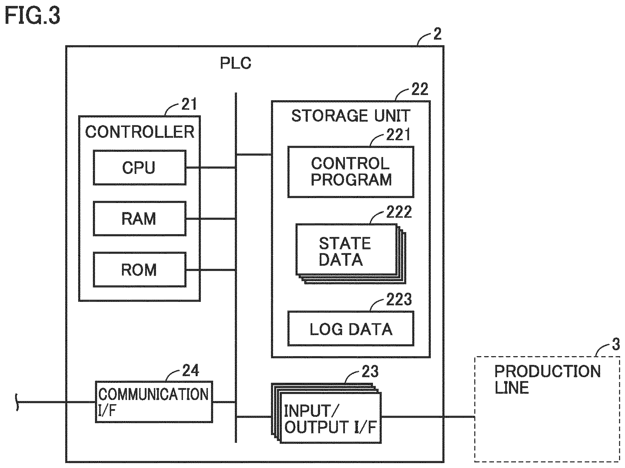

Fig. 3 is a diagram schematically illustrating an example of a hardware configuration of PLC 2 according to the embodiment. As illustrated in Fig. 3, PLC 2 is a computer in which a controller 21, a storage unit 22, an input/output interface 23, and a communication interface 24 are electrically connected to each other. Accordingly, PLC 2 is configured to control the operation of each mechanism of production line 3. Note that, in Fig. 3, the input/output interface and the communication interface are referred to as "input/output I/F" and "communication I/F", respectively.

Controller 21 includes a CPU, a RAM, a ROM, and the like, and is configured to perform various types of information processing on the basis of a program and data. Storage unit 22 includes, for example, a RAM, a ROM, and the like, and stores control program 221, state data 222, log data 223, and the like. Control program 221 is a program for controlling the operation of production line 3. State data 222 is data on the state of each mechanism. Log data 223 is data indicating a log of the operation of production line 3.

Input/output interface 23 is an interface for establishing connection with an external device, and is configured as appropriate in accordance with the external device with which connection is to be connected. In the embodiment, PLC 2 is connected to production line 3 via input/output interface 23.

Communication interface 24 is, for example, a wired LAN module, a wireless LAN module, or the like, and is an interface for performing wired or wireless communication. Communication interface 24 allows PLC 2 to perform data communication with support device 10.

Note that, regarding a specific hardware configuration of PLC 2, it is possible to omit, replace, and add a component as appropriate according to the embodiment. For example, controller 21 may include a plurality of processors. Storage unit 22 may include a RAM and a ROM included in controller 21. Storage unit 22 may include a secondary storage device such as a hard disk drive or a solid state drive. Further, PLC 2 may be replaced not only with an information processing device designed specifically for a service to be provided, but also with a general-purpose desktop PC, a tablet PC, or the like in accordance with an object to be controlled.

### <D. Hardware configuration of server>

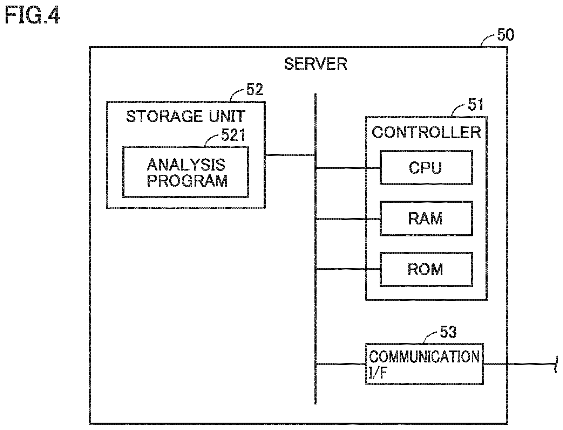

Fig. 4 is a diagram schematically illustrating an example of a hardware configuration of server 50 according to the embodiment. As illustrated in Fig. 4, server 50 according to the embodiment is a computer in which a controller 51, a storage unit 52, and a communication interface 53 are electrically connected to each other. Note that, in Fig. 4, the communication interface is referred to as "communication I/F".

Controller 51 includes a central processing unit (CPU) that is a hardware processor, a random access memory (RAM), a read only memory (ROM), and the like, and controls each component in accordance with information processing. Storage unit 52 is, for example, a secondary storage device such as a hard disk drive or a solid state drive, and stores an analysis program 521 and the like to be executed by controller 51.

Analysis program 521 is a program that acts as a chatbot, and conjectures a cause of an abnormality that has occurred in production line 3 in cooperation with support device 10 on the basis of data exchanged with support device 10. Specifically, server 50 executes analysis program 521 to acquire information (first information) indicating the state of production line 3 in response to the occurrence of a request or an event related to the abnormality, and determines the details of the abnormality that has occurred on the basis of the acquired information (first information). Further, server 50 requests, in accordance with the details of the abnormality, the user to provide the other information (second information) via support device 10, and acquires the other information (second information) from the user via support device 10. Then, server 50 conjectures the cause of the abnormality that has occurred on the basis of the acquired information (first information) and the requested other information (second information). Server 50 notifies the user of the conjectured cause of the abnormality via support device 10.

Communication interface 53 is, for example, a wired local area network (LAN) module, a wireless LAN module, or the like, and is an interface for performing wired or wireless communication over a network. Communication interface 13 allows server device 50 to perform data communication with support device 10 over the network. Note that the type of the network may be selected as appropriate from, for example, the Internet, a wireless communication network, a mobile communication network, a telephone network, a private network, and the like.

Note that, regarding a specific hardware configuration of support device 10, it is possible to omit, replace, and add a component as appropriate according to the embodiment. For example, controller 11 may include a plurality of processors. Support device 10 may include a plurality of information processing devices. Further, support device 10 may be an information processing device designed specifically for a service to be provided, or alternatively, may be a general-purpose server device, a personal computer (PC), or the like.

### <E. Software configuration of server 50>

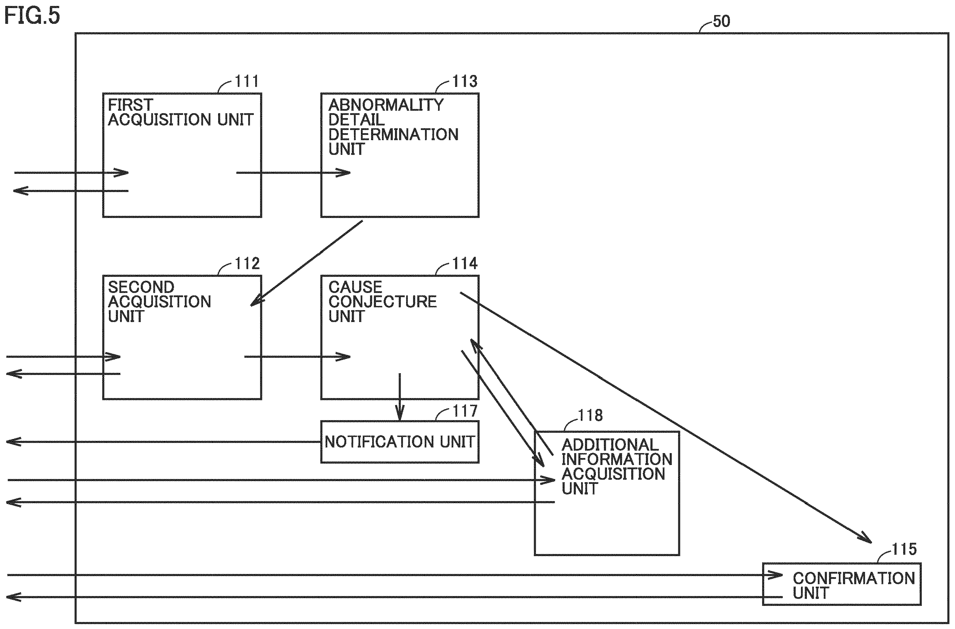

Fig. 5 is a diagram schematically illustrating an example of a software configuration of server 50 according to the embodiment. As illustrated in Fig. 5, controller 51 of server 50 loads, into the RAM, analysis program 521 stored in storage unit 52. Then, controller 51 causes the CPU to interpret and execute analysis program 521 loaded into the RAM to control each component. As a result, as illustrated in Fig. 5, server 50 according to the embodiment includes, as software modules, a first acquisition unit 111, a second acquisition unit 112, an abnormality detail determination unit 113, a cause conjecture unit 114, a notification unit 117, an additional information acquisition unit 118, and a confirmation unit 115.

First acquisition unit 111 acquires information (first information) indicating the state of each mechanism constituting production line 3. Abnormality detail determination unit 113 determines the details of the abnormality that has occurred on the basis of the acquired information. Second acquisition unit 112 requests support device 10 to provide the other information (second information) in accordance with the details of the abnormality, and acquires the other information (second information) via support device 10 in accordance with an instruction from the user. Cause conjecture unit 114 conjectures the cause that has occurred on the basis of the acquired first information and second information. Notification unit 117 notifies the user of the conjectured cause of the abnormality via support device 10.

Confirmation unit 115 confirms, via support device 10, with the user whether or not the abnormality has been eliminated from production line 3. Confirmation unit 115 acquires confirmation information indicating that the abnormality has been eliminated in accordance with the instruction from the user, and brings the processing to an end. On the other hand, upon receipt of confirmation information indicating that the abnormality has not been eliminated in accordance with the instruction from the user, confirmation unit 115 outputs the information to additional information acquisition unit 118. Additional information acquisition unit 118 requests, via support device 10, the user to provide additional information in accordance with the confirmation information indicating that the abnormality has not been eliminated, and acquires the additional information via support device 10 in accordance with the instruction from the user. Cause conjecture unit 114 conjectures the cause that has occurred on the basis of the acquired first information and second information including the additional information acquired by additional information acquisition unit 118. Then, as described above, notification unit 117 notifies the user of the conjecture cause of the abnormality via support device 10. Further, confirmation unit 115 confirms, via support device 10, with the user whether or not the abnormality has been eliminated from production line 3, acquires the confirmation information indicating that the abnormality has been eliminated in accordance with the instruction from the user, and brings the processing to an end. Note that, in a case where the abnormality has not been eliminated, confirmation unit 115 repeats the above-described processing.

Each software module of server 50 will be described in detail in the following operation example. Note that, in the embodiment, an example where each software module of server 50 is implemented by a general-purpose CPU has been described. Alternatively, some or all of the above-described software modules may be implemented by one or a plurality of dedicated hardware processors. Further, regarding the software configuration of server 50, it is possible to omit, replace, and add a software module as appropriate according to the embodiment.

### <F. Operation example>

Next, how the information processing system according to the embodiment operates will be described.

Specifically, how data is exchanged between the user and server 50 acting as a chatbot will be described. Server 50 is shown as a Bot.

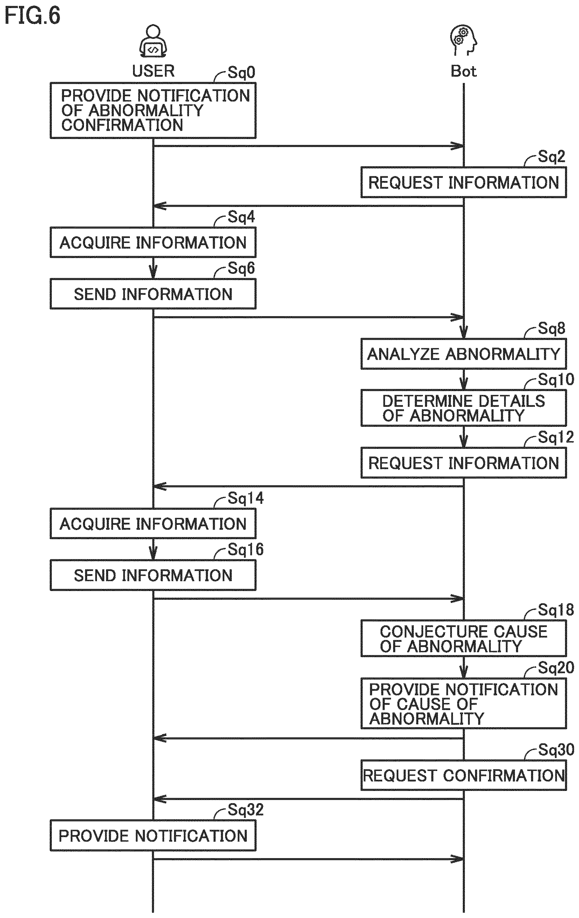

Fig. 6 is a sequence diagram for describing a data flow between the user and the Bot according to the embodiment.

As illustrated in Fig. 6, the user confirms the abnormality that has occurred in production line 3 and notifies the Bot of the abnormality (sequence Sq0). Upon receipt of the notification, the Bot requests information (sequence Sq2). Specifically, the Bot requests information indicating the state of production line 3. For example, the Bot requests log data. More specifically, first acquisition unit 111 requests, upon receipt of the notification indicating that the abnormality has occurred, support device 10 to provide the log data.

Upon receipt of the information request from the Bot, the user acquires the information indicating the state of production line 3 (sequence Sq4). As an example, the user acquires log data 223 from PLC 2. Next, the user sends the acquired information to the Bot (sequence Sq6). As an example, the user sends log data 223 to the Bot as the acquired information. The Bot analyzes the abnormality on the basis of the information (sequence Sq8). First acquisition unit 111 outputs acquired log data 223 to abnormality detail determination unit 113. Abnormality detail determination unit 113 analyzes the abnormality included in log data 223. Then, the Bot determines the details of the abnormality (sequence Sq10). Abnormality detail determination unit 113 determines the details of the abnormality analyzed on the basis of log data 223. Next, the Bot requests the user to provide information for identifying the cause of the abnormality (sequence Sq12). Abnormality detail determination unit 113 requests other information for conjecturing the cause of the abnormality in accordance with the determined details of the abnormality. As an example, abnormality detail determination unit 113 issues an instruction to second acquisition unit 112. Second acquisition unit 112 requests support device 10 to provide state data 222 in accordance with the instruction from abnormality detail determination unit 113.

Upon receipt of the information request from the Bot, the user acquires the requested information (sequence Sq14). As an example, the user acquires state data 222 from PLC 2. Next, the user sends the acquired information to the Bot (sequence Sq16). As an example, the user sends state data 222 to the Bot as the acquired information. The Bot conjectures the cause of the abnormality on the basis of the information (sequence Sq18). Second acquisition unit 112 outputs acquired state data 222 to cause conjecture unit 114. Cause conjecture unit 114 conjectures the cause of the abnormality on the basis of log data 223 and state data 222. Then, the Bot provides notification of the conjectured cause of the abnormality (sequence Sq20). Cause conjecture unit 114 instructs notification unit 117 to output the conjectured cause of the abnormality. Notification unit 117 notifies support device 10 of the cause of the abnormality.

As a result, the user can understand, upon receipt of the notification, the cause of the abnormality conjectured by the Bot. The user performs a procedure for eliminating the abnormality on the basis of the conjectured cause of the abnormality notified from the Bot. As a result, the user can acquire, at an early stage, the cause of the abnormality that has occurred in the control system.

Further, the Bot requests confirmation information indicating whether or not the abnormality has been eliminated from production line 3 (sequence Sq30).

In a case where the user determines that the abnormality has been eliminated from production line 3 in accordance with the conjectured cause of the abnormality, the user provides the notification of confirmation information indicating that the abnormality has been eliminated (sequence Sq32).

The Bot brings, upon receipt of the confirmation information indicating that the abnormality has been eliminated from the user, the processing to an end.

### <G. Operation screen>

An example of a chat screen displayed on support device 10 will be described.

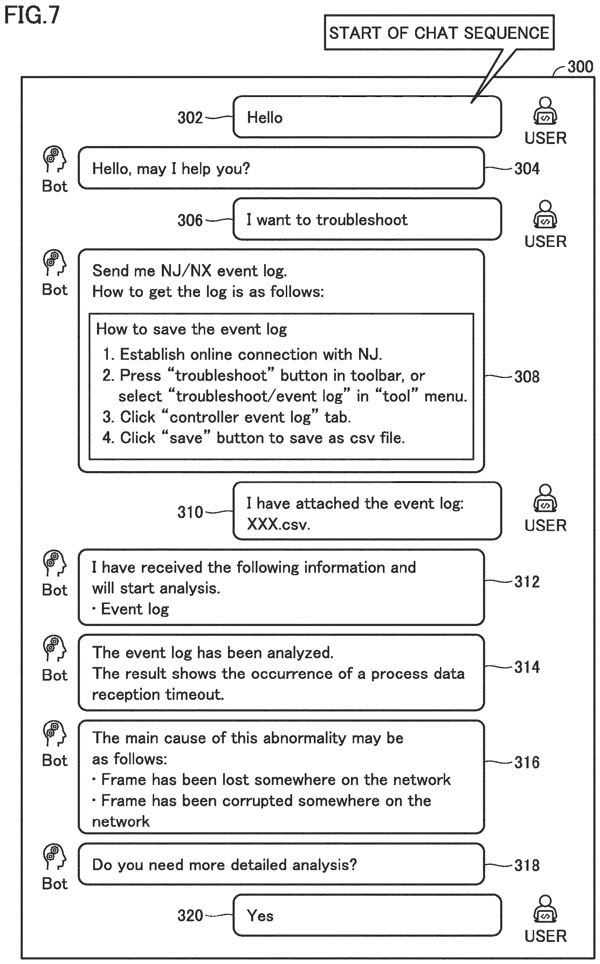

Fig. 7 is a diagram of an example (part 1) for describing a chat screen 300 according to the embodiment. As illustrated in Fig. 7, details of interaction between the user and the Bot are illustrated herein in a chat form. Chat screen 300 is a screen output and displayed on a display, which is an example of output device 15, by chat program 121 executed by controller 11, chat program 121 being stored in storage unit 12 of support device 10. The user can use a chatbot function of server 50 via support device 10 using chat screen 300. Specifically, the user inputs information (file data or the like) using input device 14 to exchange data with server 50.

On chat screen 300, the user inputs a comment 302 ("Hello"). The Bot returns, in response to the input from the user, a comment 304 ("Hello, may I help you?"). Next, the user inputs a comment 306 ("I want to troubleshoot"). The Bot returns, in response to comment 306, a comment 308 ("Send me NJ/NX event log. How to get the log is as follows."). Further, information on how to save the event log is also notified. As an example, a case where the Bot recognizes comment 306 ("I want to troubleshoot") as the occurrence of a request or an event related to an abnormality and requests transmission of information (log data) is illustrated, but the present disclosure is not limited to such a case, and the Bot may recognize a different comment as the occurrence of a request or an event related to an abnormality and request transmission of information.

Next, the user inputs a comment 310 ("Attached the event log."). At that time, file data ("XXX.csv") of the event log is also input.

The Bot performs, in response to comment 310, abnormality analysis. As an example, the Bot returns a comment 312 ("I have received the following information and will start analysis. • Event log"). Further, in a case where the Bot has finished the analysis and determined the details of the abnormality, the Bot returns a comment 314 ("The event log has been analyzed. The result shows the occurrence of a process data reception timeout."). The Bot further returns a comment 316 ("The main cause of this abnormality may be as follows. • Frame has been lost somewhere on the network. • Frame has been corrupted somewhere on the network"). The Bot further returns a comment 318 ("Do you need more detailed analysis?").

The user inputs a comment 320 ("Yes").

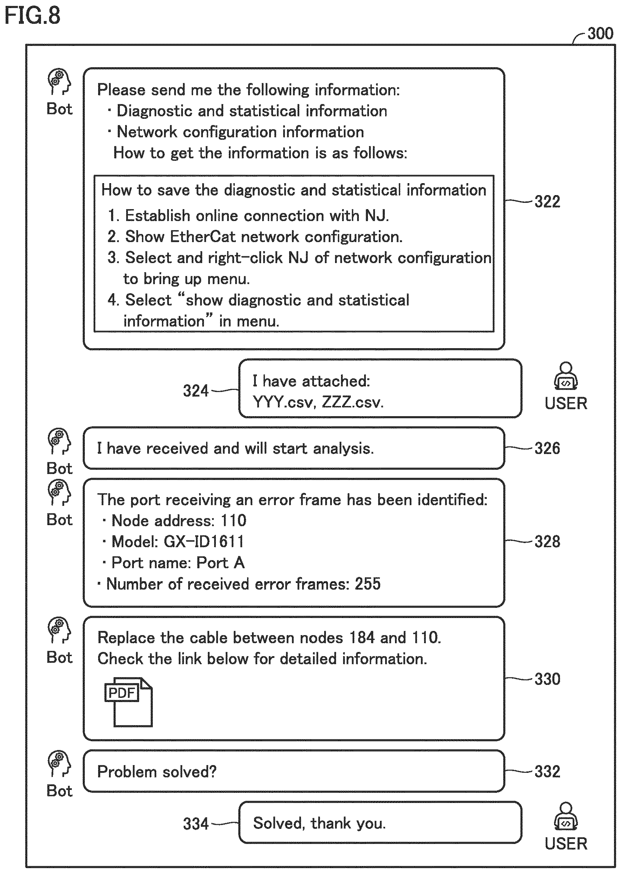

Fig. 8 is a diagram of an example (part 2) for describing chat screen 300 according to the embodiment. As illustrated in Fig. 8, the Bot requests information in response to comment 320. As an example, the Bot returns a comment 322 ("Please send me the following information. • Diagnostic information • statistical information • Network configuration information How to get the information is as follows."). Further, information on how to save the diagnostic and statistical information is also notified. The requested information is based on the details of the abnormality determined by the analysis. The present example is a case where "process data reception timeout" is determined as the details of the abnormality as an example, and information requested in accordance with the determined details of the abnormality differs each time.

The user inputs a comment 324 ("Attached."). At that time, file data ("YYY.csv") of the diagnostic and statistical information and file data ("ZZZ.csv") of the network configuration information are also input.

The Bot conjectures, in response to comment 324, the cause of the abnormality. As an example, the Bot returns a comment 326 ("I have received and will start analysis."). Further, in a case where the Bot has finished the analysis and conjectured the cause of the abnormality, the Bot returns a comment 328 ("The port receiving the error frame has been identified. • Node address: 110 • Model: GX-ID1611 • Port name: Port A • Number of received error frames: 255"). Further, the Bot returns a comment 330 ("Replace the cable between nodes 184 and 110. Check the link below for detailed information."). Further, the Bot returns accessible file data ("PDF"). Further, the Bot returns a comment 332 ("Problem solved?") for confirming whether or not the abnormality has been eliminated.

The user returns a comment 334 ("Solved, thank you.").

The Bot brings, in response to comment 334, the processing on the chat screen to an end.

Note that, in the present example, the case where the Bot returns comment 318 and returns comment 322 in response to comment 320 from the user has been described, but the present disclosure is not limited to such an example, and the Bot may return comment 322 without the processing of comment 318 and comment 320.

Further, the Bot may return, to the user, comments 326, 328, 330, and 332 as a combined comment, and may change the comment as appropriate.

The above-described processing allows the user to acquire, through the chat processing, the cause of the abnormality that has occurred in the control system at an early stage.

### (First modification)

In the above-described embodiment, the case where the abnormality is eliminated on the basis of one-time conjecture of the cause of the abnormality has been described. A case where the Bot requests additional information will be described.

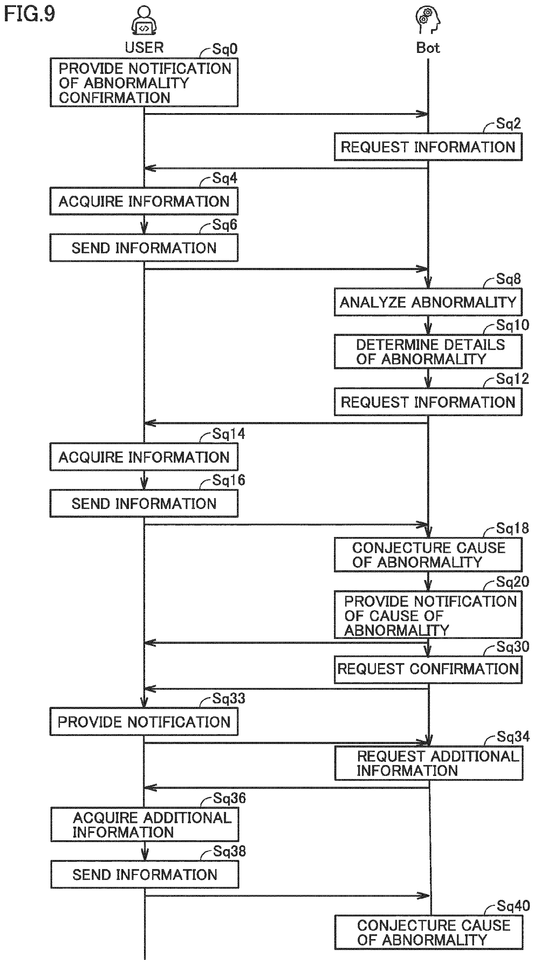

Fig. 9 is a sequence diagram for describing a data flow between the user and the Bot according to a first modification of the embodiment.

With reference to Fig. 9, the processes in sequence Sq33 and the subsequent sequences are different from those in the sequence diagram of Fig. 6.

In a case where the user determines that the abnormality has not been eliminated from production line 3 in accordance with the conjectured cause of the abnormality, the user provides the notification of confirmation information indicating that the abnormality has not been eliminated (sequence Sq33). Upon receipt of the confirmation information indicating that the abnormality has not been eliminated in accordance with the instruction from the user, confirmation unit 115 outputs the information to additional information acquisition unit 118.

Upon receipt of the confirmation information indicating that the abnormality has not been eliminated from the user, the Bot requests the user to provide additional information for identifying the cause of the abnormality (sequence Sq34). Additional information acquisition unit 118 requests the user to provide the additional information via support device 10 in accordance with the confirmation information indicating that the abnormality has not been eliminated.

In response to the request for the additional information from the Bot, the user acquires the requested additional information (sequence Sq36). As an example, the user acquires information of image data. Next, the user sends the acquired information to the Bot (sequence Sq38). As an example, the user sends image data to the Bot as the acquired information. The Bot conjectures the cause of the abnormality on the basis of the information (sequence Sq40). Additional information acquisition unit 118 outputs the acquired image data to cause conjecture unit 114. Cause conjecture unit 114 conjectures the cause of the abnormality on the basis of log data 223, state data 222, and the image data. Then, the processes in sequence Sq20 and the subsequent sequences are repeated. That is, the Bot provides notification of the conjectured cause of the abnormality. Cause conjecture unit 114 instructs notification unit 117 to output the conjectured cause of the abnormality. Notification unit 117 notifies support device 10 of the cause of the abnormality. The Bot requests confirmation information indicating whether or not the abnormality has been eliminated from production line 3. The user provides confirmation information indicating that the abnormality has not been eliminated from production line 3 in accordance with the conjectured cause of the abnormality.

Upon receipt of the confirmation information indicating that the abnormality has not been eliminated, the Bot further requests the user to provide different additional information. The user sends the requested different additional information to the Bot. The Bot conjectures the cause of the abnormality on the basis of the acquired information. The repetition of the processing until the abnormality is eliminated makes it possible to narrow down the conjectured cause of the abnormality that has occurred in production line 3 and reach the true cause of the abnormality.

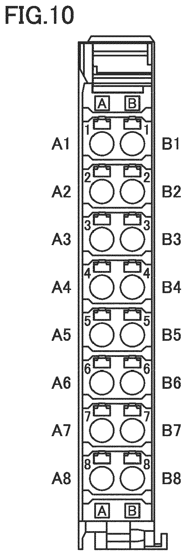

Fig. 10 is a diagram for describing an example of image data of a communication unit according to the first modification of the embodiment. With reference to Fig. 10, image data of a terminal portion of the communication unit provided in production line 3 is illustrated here. The terminal portion has a plurality of terminals to which wiring can be connected. As an example, a case where terminals A1 to A8 and terminals B1 to B8 are provided is illustrated. For example, the user acquires the image data of the terminal portion and sends the image data to the Bot. The Bot can acquire the image data and analyze the image data to check a connection relation between the terminals. For example, the Bot can check the presence or absence of a wiring connection by comparing the acquired image data with reference data, the reference data corresponding to image data obtained when no wiring is connected to the terminal portion and being held in advance.

As an example, the Bot can check the connection relation between the terminals and conjecture an abnormality in connection on the basis of the connection relation between the terminals as the cause of the abnormality. Then, the Bot can notify the user of the abnormality in connection. Note that the Bot may notify the user of a solution together with the notification of the abnormality in connection. Upon receipt of the notification, the user can understand the cause of the abnormality conjectured by the Bot. The user performs a procedure for eliminating the abnormality on the basis of the conjectured cause of the abnormality notified from the Bot. As a result, the user can acquire, at an early stage, the cause of the abnormality that has occurred in the control system.

Note that, in the above description, the example where the image data is requested as the additional information has been described, but it is needless to say that the image data can be requested as not only the additional information but also the other information in sequence sq12, for example. The same applies to other examples.

### (Second modification)

In the above-described first modification, the case where the image data of the terminal portion of the communication unit is acquired as the additional information and sent to the Bot has been described, but this applies not only to the communication unit, but also to other mechanisms constituting production line 3.

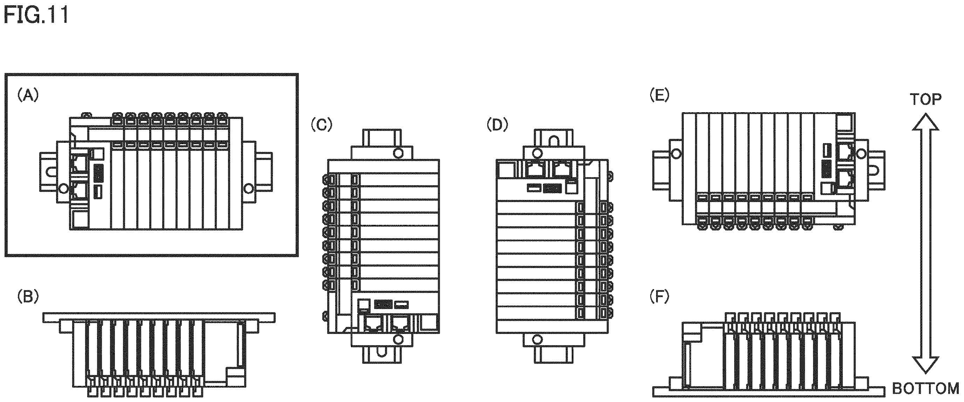

Fig. 11 is a diagram for describing a layout configuration of a thermocouple input unit according to a second modification of the embodiment. With reference to Figs. 11(A) to (F), six layout patterns of a thermocouple unit mounted in a board are illustrated.

For example, a case where the Bot determines that there is an abnormality in the thermocouple unit on the basis of log data. As an example, in a case where the Bot determines that there is an abnormality in the thermocouple unit, the Bot requests the user to provide a layout image of the thermocouple unit.

As an example, it is assumed that Fig. 11(A) shows an appropriate layout configuration.

For example, the user acquires image data of the layout of the thermocouple input unit in response to the request from the Bot and sends the image data to the Bot. The Bot can acquire the image data and analyze the image data to check whether or not it is placed in the appropriate layout. For example, the Bot can compare the acquired image data with reference data to check whether or not it is placed in the appropriate layout, the reference data corresponding to image data of the plurality of layout patterns described above and being held in advance.

Then, in a case where there is an abnormality in the layout, the Bot can notify the user of the abnormality. Note that the Bot may notify the user of an appropriate layout drawing as a solution together with the notification of the abnormality in the layout. Upon receipt of the notification, the user can understand the cause of the abnormality conjectured by the Bot. The user performs a procedure for eliminating the abnormality on the basis of the conjectured cause of the abnormality notified from the Bot. As a result, the user can acquire, at an early stage, the cause of the abnormality that has occurred in the control system.

### (Third modification)

It is possible to conjecture, on the basis of the additional information, even a cause of an abnormality that occurs over time.

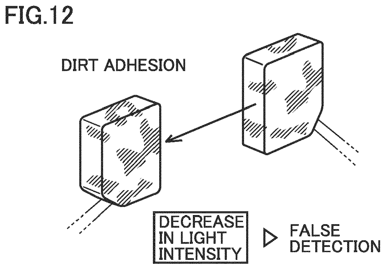

Fig. 12 is a diagram for describing a state of a photoelectric sensor according to a third modification of the embodiment. With reference to Fig. 12, a case where dirt adheres to a part of the photoelectric sensor is illustrated. In a case where dirt adheres to a light emitting surface or a light receiving surface, there is a possibility of false detection due to a decrease in light intensity.

For example, a case where the Bot determines that there is an abnormality in the photoelectric sensor on the basis of log data will be described. As an example, in a case where the Bot determines that there is an abnormality in the photoelectric sensor, the Bot requests the user to provide an image indicating the state of the photoelectric sensor.

For example, the user acquires image data indicating the state of the photoelectric sensor in response to the request from the Bot, and sends the image data to the Bot. The Bot can acquire the image data and analyze the image data to check whether or not the photoelectric sensor is in normal operation. For example, the Bot can analyze the image data to check whether or not there is dirt.

Then, in a case where there is an abnormality in the state of the photoelectric sensor, the Bot can notify the user of the abnormality. Note that the Bot may notify the user of cleaning of the light emitting surface or the light receiving surface as a solution together with the notification of the abnormality in the state of the photoelectric sensor. Upon receipt of the notification, the user can understand the cause of the abnormality conjectured by the Bot. The user performs a procedure for eliminating the abnormality on the basis of the conjectured cause of the abnormality notified from the Bot. As a result, the user can acquire, at an early stage, the cause of the abnormality that has occurred in the control system.

### (Fourth modification)

In the above-described modifications, the case where the image data that is a still image is sent to the Bot as the additional information has been described, but the image data is not limited to a still image, and the image data that is a moving image may be sent to the Bot as the additional information.

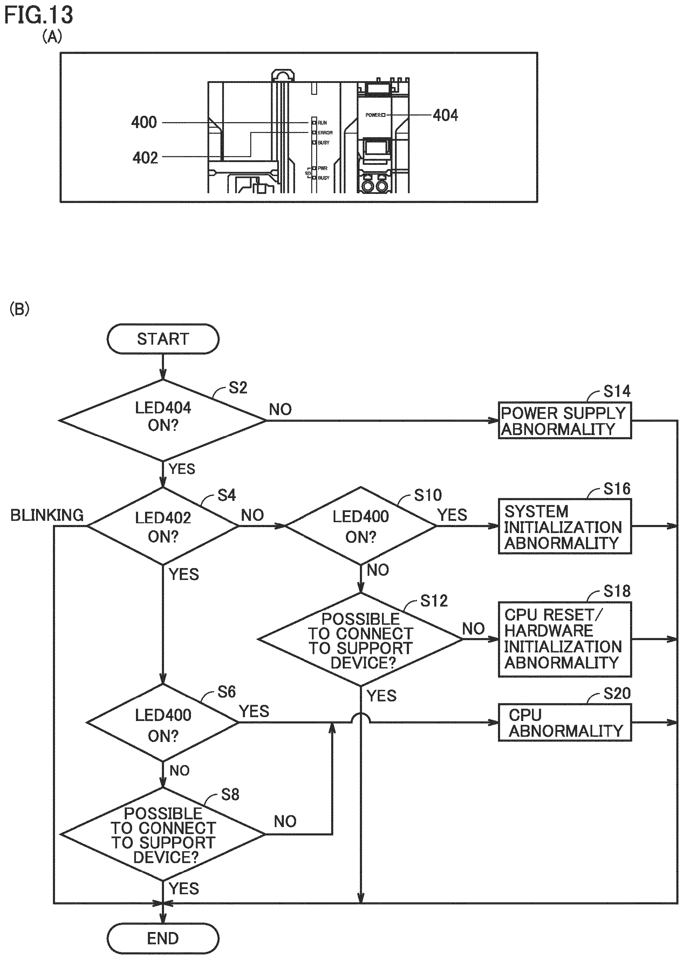

Fig. 13 is a diagram for describing a state of a CPU unit according to a fourth modification of the embodiment. With reference to Fig. 13(A), in the present example, an LED provided in the CPU unit is illustrated as an example. As an example, a case where an LED 404 indicating a state of a power supply (POWER), an LED 400 indicating an operation state (RUN), and an LED 402 indicating an abnormal (ERROR) state are provided is illustrated.

As an example, the abnormal state of the CPU unit can be conjectured on the basis of light emission states of LEDs 400 to 404.

With reference to Fig. 13(B), a flow for describing how to determine the abnormal state of the CPU unit is illustrated. It is determined whether or not LED 404 is ON (step S2). Next, in a case where it is determined in step S2 that LED 404 is ON, it is determined next whether or not LED 402 is ON (step S4).

In step S4, in a case where LED 402 is blinking (blinking in step S4), the processing is brought to an end (ended). In this case, the processing is brought to an end without determining that there is an abnormality.

In step S4, in a case where LED 402 is ON and is not blinking (YES in step S4), it is determined whether or not LED 400 is ON (step S6).

In a case where it is determined in step S6 that the LED is ON (YES in step S6), it is determined as a CPU abnormality (step S20). Then, the processing is brought to an end.

On the other hand, in a case where it is determined in step S6 that the LED is not ON (NO in step S6), it is determined whether or not the CPU unit can be connected to support device 10 (step S8). Specifically, an inquiry about whether or not the CPU unit can be connected to support device 10 is made to the user, and it is determined whether or not the connection can be established in accordance with the input from the user.

In a case where it is determined in step S8 that the CPU unit can be connected to support device 10 (YES in step S8), the processing is brought to an end (ended) without determining that there is an abnormality.

On the other hand, in a case where it is determined in step S8 that the CPU unit cannot be connected to support device 10 (NO in step S8), it is determined to be a CPU abnormality (step S20). Then, the processing is brought to an end.

In a case where LED 402 is not ON in step S4 (NO in step S4), it is determined whether or not LED 400 is ON (step S10).

In a case where it is determined in step S10 that LED 400 is ON (YES in step S10), it is determined to be a system initialization abnormality (step S16). Then, the processing is brought to an end.

In a case where it is determined in step S10 that LED 400 is not ON (NO in step S10), it is determined whether or not the CPU unit can be connected to support device 10 (step S12).

In a case where it is determined in step S12 that the CPU unit can be connected to support device 10 (YES in step S12), the processing is brought to an end (ended) without determining that there is an abnormality.

On the other hand, in a case where it is determined in step S12 that the CPU unit cannot be connected to support device 10 (NO in step S12), it is determined to be a CPU reset/hardware initialization abnormality (step S18). Then, the processing is brought to an end.

It is possible to identify the type of the abnormal state of the CPU unit by detecting the light emission states of LEDs 400 to 404 in accordance with the above-described flow.

For example, a case where the Bot determines that there is an abnormality in the CPU unit on the basis of the log data will be described. As an example, in a case where it is determined that there is an abnormality in the CPU unit, the Bot requests the user to provide image data of a moving image indicating the states of the LEDs of the CPU unit for a predetermined period.

For example, the user acquires moving image data of a moving image indicating the states of the LEDs of the CPU unit for a predetermined period in response to the request from the Bot, and sends the moving image data to the Bot. The Bot can determine the type of the abnormal state of the CPU unit by acquiring the moving image data and determining the abnormality in accordance with the above-described flow.

Then, in a case where there is an abnormality in the state of the CPU unit, the Bot can notify the user of the abnormality. Note that the Bot may notify the user of a necessary measure as a solution together with the abnormality notification indicating the abnormal state of the CPU unit. Upon receipt of the notification, the user can understand the cause of the abnormality conjectured by the Bot. The user performs a procedure for eliminating the abnormality on the basis of the conjectured cause of the abnormality notified from the Bot. As a result, the user can acquire, at an early stage, the cause of the abnormality that has occurred in the control system.

### (Fifth modification)

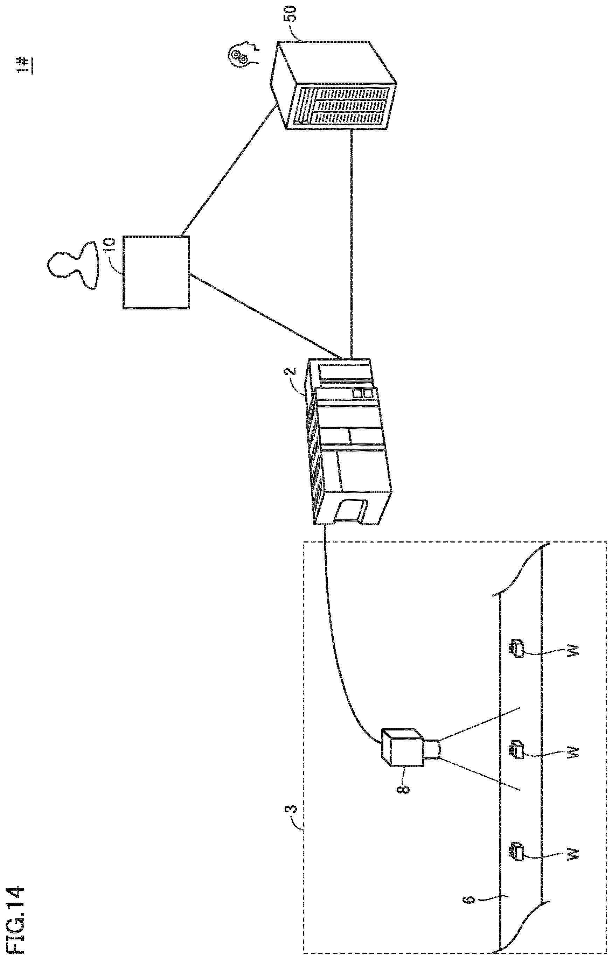

Fig. 14 is a diagram schematically illustrating an example of a scene of how to use an information processing system 1# according to a fifth modification of the embodiment. With reference to Fig. 14, it is different from information processing system 1 in that server 50 is connected to PLC 2.

In the above-described embodiment, since server 50 is not connected to PLC 2, the information necessary for conjecturing the abnormality that has occurred in production line 3 is acquired via input from the user via the support device 10.

On the other hand, in this state, server 50 may acquire the necessary information from PLC 2. Specifically, server 50 itself may acquire the log data held by PLC 2.

Further, in the present example, Fig. 7 illustrates the case where the user sends comment 306 ("I want to troubleshoot") to the Bot, and the Bot recognizes the occurrence of a request or an event related to an abnormality on the basis of comment 306 and requests transmission of information (log data), but the present disclosure is not limited to such a case, and the Bot may operate without depending on input from the user to request the user to provide the information. For example, in a case of the configuration of information processing system 1#, since PLC 2 and server 50 are connected to each other, server 50 can detect the abnormality via PLC 2. Therefore, in response to the abnormality that has occurred in PLC 2, server 50 may recognize the occurrence of a request or an event related to the abnormality to request transmission of information.

### (Sixth modification)

In the above description, the case where state data 222 as the other information that server 50 requests the user to provide is sent to server 50 has been described as an example, but the other information is not limited to state data 222, and control program 221 having device design information described therein may be sent to server 50 to cause server 50 to conjecture the details of the abnormality.

Further, various types of information such as sound information and vibration information can be used as the other information or the additional information, and any type of information may be used. For example, server 50 may request the user to provide a driving sound of an actuator as the sound information, and the user may send the driving sound to server 50 to check an abnormality in the actuator on the basis of the driving sound. Further, the user may be requested to provide not only the driving sound but also an operation sound. For example, server 50 may request the operation sound of the CPU unit, and the user may send the operation sound to server 50 to check an abnormality in the CPU unit on the basis of the operation sound. For example, an abnormal sound caused by an abnormality in a cooling fan or deterioration of an electrolytic capacitor may be detected.

As the vibration information, server 50 requests the user to provide data of a vibration sensor. The user sends, to server 50, the vibration data according to the vibration sensor of production line 3. Server 50 may conjecture the abnormality in production line 3 on the basis of the vibration data or the like. Further, the user is requested to provide not only the vibration sensor but also data from various types of sensors such as an odor sensor and an infrared sensor, and the user sends the requested various types of sensor data to server 50. Server 50 may conjecture the abnormality in production line 3 on the basis of the various types of sensor data or the like. A combination of various types of sensors and the like can be changed as appropriate.

Therefore, server 50 may request information on any one of the sense of sight, the sense of hearing, the sense of taste, the sense of small, or the sense of touch, which are human's five senses, as the other information or the additional information using the various types of sensors described above to acquire the information via support device 10. Server 50 conjectures the cause of the abnormality on the basis of the acquired information. Note that server 50 may request not only such sensors but also the user to provide information acquired on the basis of user's five senses as the other information or the additional information, and the user may input the information acquired on the basis of the user's five senses via support device 10. As a result, server 50 may acquire on-site raw information that devices such as the sensors cannot acquire to conjecture the cause of the occurrence of the abnormality using the raw information. Even if there is no sensor at the site, the presence of the user (person) at the site also makes it possible to acquire information more than or equal to information acquired from the sensors. The information processing system can conjecture, by communicating with server 50 via support device 10, the cause of the abnormality that has occurred on the basis of coordination between sensing and control using human's five senses.

### (Seventh modification)

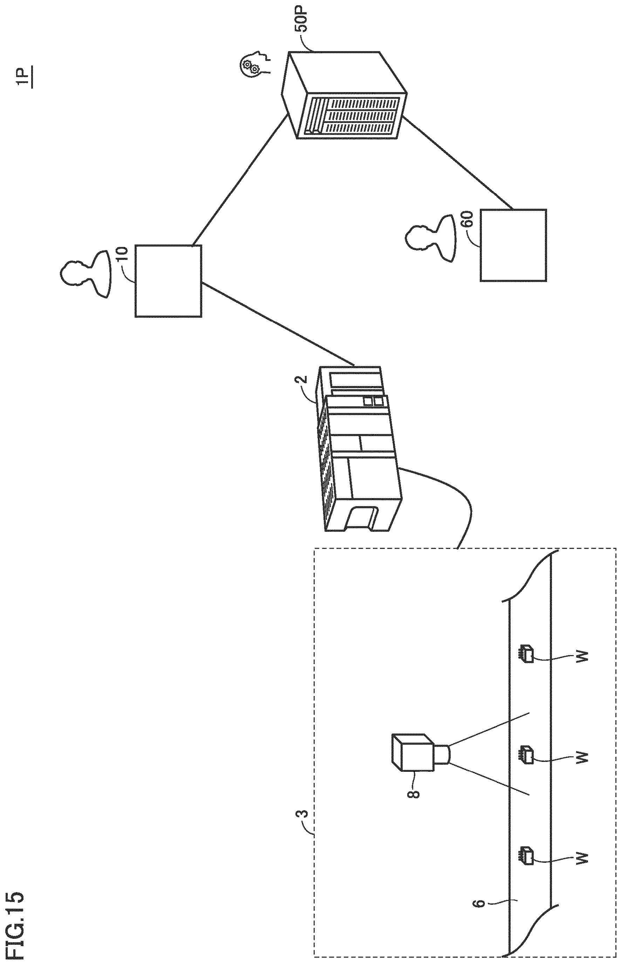

Fig. 15 is a diagram schematically illustrating an example of a scene of how to use an information processing system 1P according to a seventh modification of the embodiment. As illustrated in Fig. 15, information processing system 1P according to the seventh modification of the embodiment is different from information processing system 1 in that server 50 is replaced with a server 50P, and server 50P is connected to a support device 60 of an administrator.

In the above-described embodiment, only server 50 and support device 10 of the user are connected to each other, but connection is further established with support device 60 of the administrator so as to allow the administrator and the user to communicate with each other via server 50P.

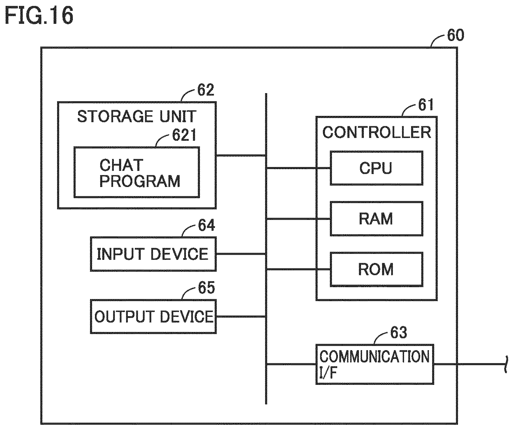

Fig. 16 is a diagram schematically illustrating an example of a hardware configuration of support device 60 according to the seventh modification of the embodiment. As illustrated in Fig. 16, support device 60 according to the seventh modification of the embodiment is a computer in which a controller 61, a storage unit 62, a communication interface 63, an input device 64, and an output device 65 are electrically connected to each other. Note that, in Fig. 16, the communication interface is referred to as "communication I/F".

Controller 61 includes a central processing unit (CPU) that is a hardware processor, a random access memory (RAM), a read only memory (ROM), and the like, and controls each component in accordance with information processing. Storage unit 62 is, for example, a secondary storage device such as a hard disk drive or a solid state drive, and stores a chat program 621 and the like to be executed by controller 61.

Chat program 621 is a program that accesses server 50P acting as a chatbot and provides an interface screen and the like for exchanging information with the user via server 50P.

Communication interface 63 is, for example, a wired local area network (LAN) module, a wireless LAN module, or the like, and is an interface for performing wired or wireless communication over a network. Note that the type of the network may be selected as appropriate from, for example, the Internet, a wireless communication network, a mobile communication network, a telephone network, a private network, and the like.

Input device 64 is, for example, a device for performing input, such as a mouse or a keyboard. Furthermore, output device 65 is, for example, a device for performing output, such as a display or a speaker. The administrator (operator) can operate support device 60 via input device 64 and output device 65.

Note that, regarding a specific hardware configuration of support device 60, it is possible to omit, replace, and add a component as appropriate according to the embodiment. For example, controller 61 may include a plurality of processors. Support device 60 may include a plurality of information processing devices. Further, support device 60 may be an information processing device designed specifically for a service to be provided, or alternatively, may be a general-purpose server device, a personal computer (PC), or the like.

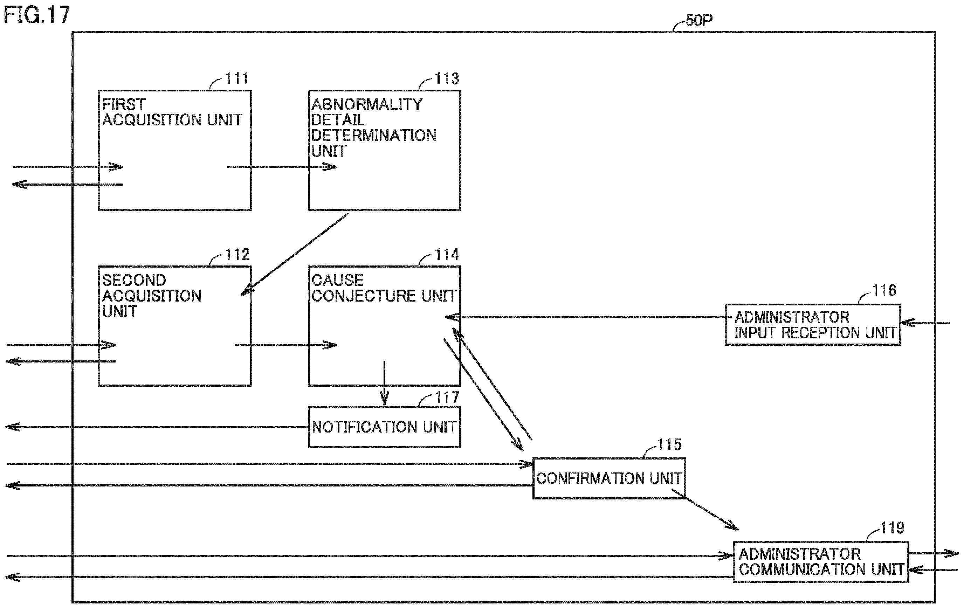

Fig. 17 is a diagram schematically illustrating an example of a software configuration of server 50P according to the seventh modification of the embodiment. As illustrated in Fig. 17, a server 60P further includes an administrator communication unit 119 and an administrator input reception unit 116 instead of additional information acquisition unit 118, as compared with server 50 in Fig. 5. The other configurations are the same as described with reference to Fig. 5, so that no detailed description of such configurations will be given below.

Upon receipt of the confirmation information indicating that the abnormality has not been eliminated in accordance with the instruction from the user, confirmation unit 115 outputs the information to administrator communication unit 119.

Administrator communication unit 119 notifies the administrator that the abnormality has not been eliminated via support device 60 in accordance with the confirmation information indicating that the abnormality has not been eliminated. Further, administrator communication unit 119 provides, to the user, information on communication with the administrator via support device 10, and controls the communication between support device 10 and support device 60.

The administrator receives information from administrator communication unit 119 of server 50P and requests the user to provide necessary information.

The user transmits the necessary information in response to the request from the administrator via server 50P. The administrator receives the information via support device 60 and investigates the cause of the abnormality. The administrator transmits a result of the investigation of the cause of the abnormality to the user via server 50P, and repeats the above-described processing in a case where the abnormality has not been eliminated.

Next, how the information processing system according to the seventh modification of the embodiment operates will be described.

Specifically, data exchange between the user and server 50P acting as a chatbot will be described. Server 50 is shown as a Bot.

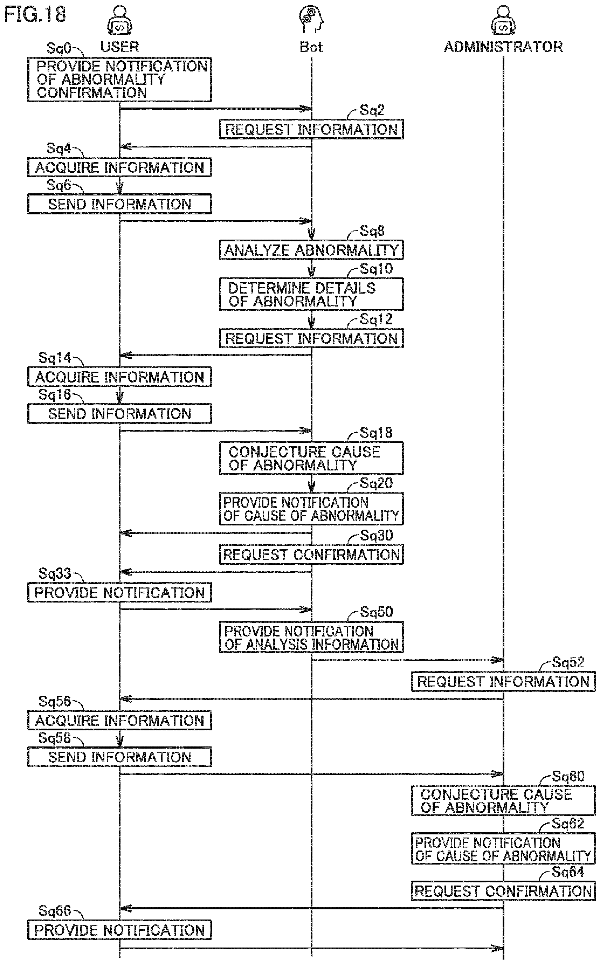

Fig. 18 is a sequence diagram for describing a data flow among the user, the Bot, and the administrator according to the seventh modification of the embodiment.

With reference to Fig. 18, the processes in sequence Sq33 and the subsequent sequences are different from those in the sequence diagram of Fig. 6.

In a case where the user determines that the abnormality has not been eliminated from production line 3 in accordance with the conjectured cause of the abnormality, the user provides the notification of confirmation information indicating that the abnormality has not been eliminated (sequence Sq33). Upon receipt of the confirmation information indicating that the abnormality has not been eliminated in accordance with the instruction from the user, confirmation unit 115 outputs the information to administrator communication unit 119.

Upon receipt of the confirmation information indicating that the abnormality has not been eliminated from the user, the Bot notifies the administrator of analysis information for identifying the cause of the abnormality (sequence Sq50). Administrator communication unit 119 transmits, to the administrator via support device 60, all the information (or some of the information) exchanged with the user as the analysis information in accordance with the confirmation information indicating that the abnormality has not been eliminated.

Upon receipt of the analysis information from the Bot, the administrator requests the user to provide additional information via support device 60 as necessary.

In response to the request for the additional information from the administrator via the Bot, the user acquires the requested additional information (sequence Sq56). As an example, the user acquires information on a project file so as to allow detailed investigation. Next, the user sends the acquired information to the administrator via the Bot (sequence Sq58). As an example, the user sends the information on the project file to the administrator as the acquired information. The administrator conjectures the cause of the abnormality on the basis of the information (sequence Sq60). Then, the administrator provides notification of the conjectured cause of the abnormality via the Bot (sequence Sq62). Administrator communication unit 119 controls the communication between support device 60 of the administrator and support device 10 of the user.

As a result, the user can understand, upon receipt of the notification, the cause of the abnormality conjectured by the administrator. The user performs a procedure for eliminating the abnormality on the basis of the conjectured cause of the abnormality notified from the administrator. As a result, the user can acquire, at an early stage, the cause of the abnormality that has occurred in the control system.

Further, the administrator requests confirmation information indicating whether or not the abnormality has been eliminated from production line 3 (sequence Sq64).

In a case where the user determines that the abnormality has been eliminated from production line 3 in accordance with the conjectured cause of the abnormality, the user provides the notification of confirmation information indicating that the abnormality has been eliminated (sequence Sq66).

The administrator brings, upon receipt of the confirmation information indicating that the abnormality has been eliminated from the user, the processing to an end.

Upon receipt of confirmation information indicating that the abnormality has not been eliminated, the administrator further requests the user to provide different additional information. The user sends the requested different additional information to the administrator via the Bot. The administrator conjectures the cause of the abnormality on the basis of the acquired information. The repetition of the processing until the abnormality is eliminated makes it possible to narrow down the conjectured cause of the abnormality that has occurred in production line 3 and reach the true cause of the abnormality.

The processing makes it possible to reach, even in a case where an abnormality that cannot be solved by the Bot occurs, the cause of the abnormality at an early stage by shifting to the connection between the administrator and the user.

An example of a chat screen displayed on support device 10 will be described.

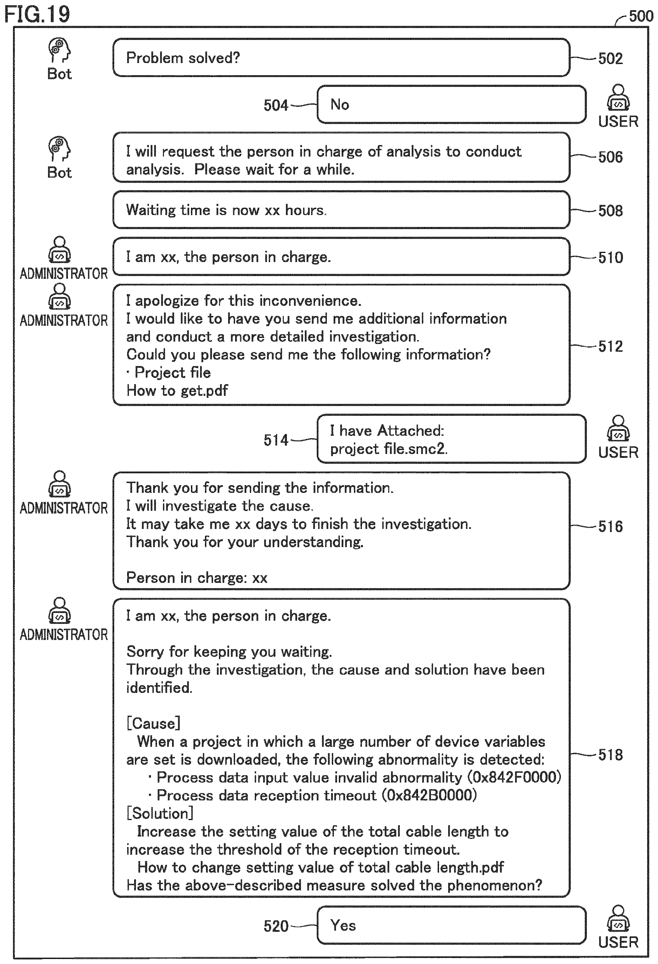

Fig. 19 is a diagram of an example (part 3) for describing a chat screen 500 according to the seventh modification of the embodiment. As illustrated in Fig. 19, on chat screen 500, the Bot returns a comment 502 ("Problem solved?") in sequence Sq30. The user inputs a comment 504 (No). Bot returns, in response to comment 504, a comment 506 ("I will request the person in charge of analysis to conduct analysis. Please wait for a while."). Further, a comment 508 ("Waiting time is now xx hours.") is returned.

The administrator inputs a comment 510 ("I am xx, the person in charge.").

Further, the administrator inputs a comment 512 ("I apologize for this inconvenience. I would like to have you send me additional information and conduct a more detailed investigation. Could you please send me the following information? • Project file"). Further, the administrator inputs accessible file data ("How to get.pdf").

The user inputs a comment 514 ("Attached."). At that time, file data ("project file.smc2") is also input.

In response to comment 514, the administrator conjectures the cause of the abnormality. As an example, the administrator returns a comment 516 ("Thank you for sending the information. I will investigate the cause, and it may take me xx days to finish the investigation. Thank you for your understanding. Person in charge: xx").

Further, in a case where the administrator has successfully conjectured the cause of the abnormality, the administrator returns a comment 518 ("I am xx, the person in charge. Sorry for keeping you waiting. Through the investigation, the cause and solution have been identified. [Cause] When a project in which a large number of device variables are set is downloaded, the following abnormality is detected: • Process data input value invalid abnormality (0x842F0000) • Process data reception timeout (0x842B0000). [Solution] Increase the setting value of the total cable length to increase the threshold of the reception timeout. Has the above-described measure solved the phenomenon?").

Further, the administrator returns accessible file data ("How to change setting value of total cable length.pdf").

The user inputs a comment 520 ("Yes").

In response to comment 520, the administrator brings the processing on the chat screen to an end.

Note that, in the present example, the case where the Bot returns comments 506 and 508 to the user has been described, but comment 510 input by the administrator may be returned to the user without the processing of comments 506 and 508.

Further, the Bot may return, to the user, comments 506 and 508 as a combined comment, and may change the comment as appropriate.

The above-described processing allows the user to acquire, through the chat processing, the cause of the abnormality that has occurred in the control system at an early stage.

Further, a configuration may be employed where the result of conjecturing the cause of the abnormality is recorded as knowledge in server 50P, and in a case where a similar event occurs in the future, the bot can arrive at a solution without transmitting information to the administrator.

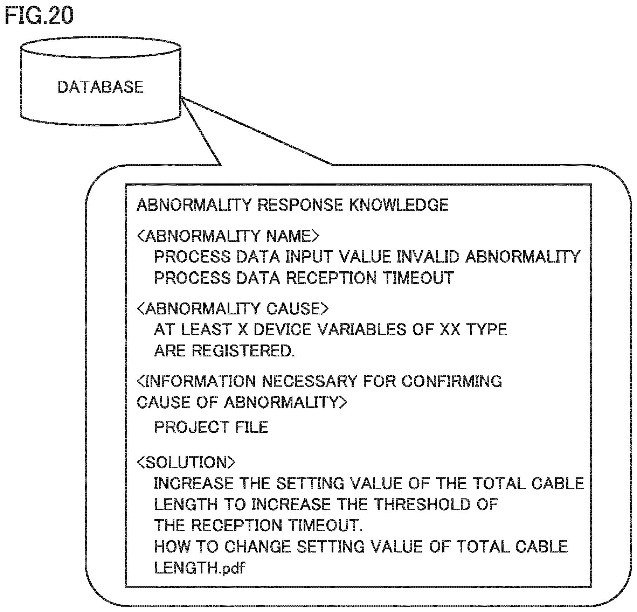

Fig. 20 is a diagram for describing a database managed by cause conjecture unit 114 of server 50P.

As illustrated in Fig. 20, cause conjecture unit 114 includes a database in which results of conj ecturing causes of abnormalities are accumulated. The cause of the abnormality is grasped using the information accumulated in the database, and information for eliminating the abnormality is presented. The administrator registers the result of conjecturing the cause of the abnormality in the database. Specifically, administrator input reception unit 116 registers, in the database, abnormality response knowledge data input by the administrator via support device 60 of the administrator.

As an example, the administrator registers, in the database, abnormality response knowledge data: "<Abnormality name> Process data input value invalid abnormality Process data reception timeout <Abnormality cause> x device variables of xx type have been abnormally registered. <Information necessary for confirming cause of abnormality> Project file <Solution> Increase the setting value of the total cable length to increase the threshold of the reception timeout.", and file data ("How to change setting value of total cable length.pdf').

Cause conjecture unit 114 conjectures the cause of the abnormality using the updated information in the database.

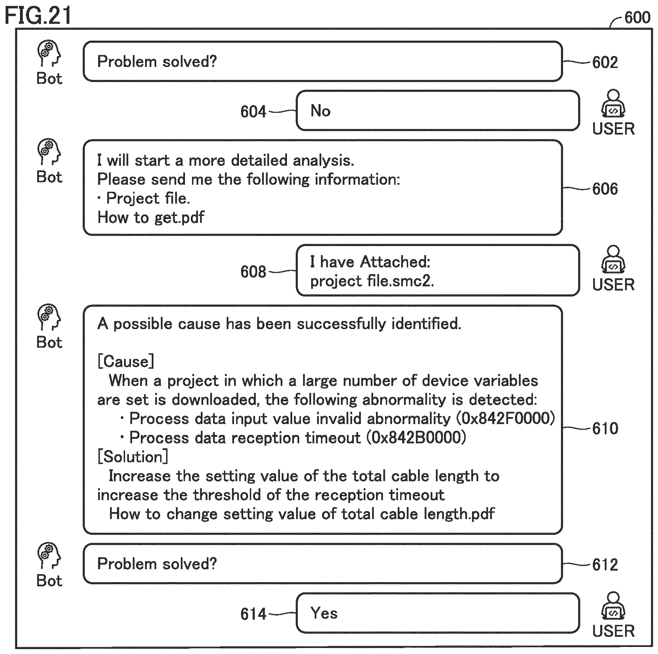

Fig. 21 is a diagram of an example (part 4) for describing a chat screen 600 according to the seventh modification of the embodiment. As illustrated in Fig. 21, on chat screen 600, the Bot returns a comment 602 ("Problem solved?") in sequence Sq30. The user inputs a comment 604 (No). The Bot returns, in response to comment 604, a comment 606 ("I will start a more detailed analysis. Please send me the following information: • Project file."). Further, the Bot returns accessible file data ("How to get.pdf').

The user inputs a comment 608 ("Attached."). At that time, file data ("project file.smc2") is also input.

In response to comment 608, the Bot conjectures the cause of the abnormality. As an example, the Bot returns a comment 610 ("A possible cause has been successfully identified. [Cause] When a project in which a large number of device variables are set is downloaded, the following abnormality is detected: • Process data input value invalid abnormality (0x842F0000) • Process data reception timeout (0x842B0000). [Solution] Increase the setting value of the total cable length to increase the threshold of the reception timeout.").

Further, the Bot returns accessible file data ("How to change setting value of total cable length.pdf").

Further, the Bot returns a comment 612 ("Problem solved?") for confirming whether or not the abnormality has been eliminated.

The user inputs a comment 614 ("Yes").

The Bot brings, in response to comment 614, the processing on the chat screen to an end.

Note that, in the present example, the case where the Bot separately returns comments 610 and 612 has been described, but the Bot may return, to the user, comments 610 and 612 as a combined comment, and may change the comment as appropriate.

The above-described processing allows the user to acquire, through the chat processing, the cause of the abnormality that has occurred in the control system at an early stage. Further, the administrator can acquire the cause of the abnormality corresponding to a new event at an early stage by registering the abnormality response knowledge data in server 50P.

Note that, in the present example, the configuration without additional information acquisition unit 118 has been described as the configuration of server 50P, but it is needless to say that a configuration provided with additional information acquisition unit 118 may be employed. Specifically, in a case where the abnormality has not been eliminated even in a case where the additional information is acquired using additional information acquisition unit 118, the notification of the case may be provided to administrator communication unit 119 to cause administrator communication unit 119 to control the communication between support device 10 of the user and support device 60 of the administrator as described above.

It is needless to say that those skilled in the art can arbitrarily combine the embodiment, the modifications, and the like as appropriate.

### <H. Advantages>

The information processing system and the information processing system control method according to the embodiment allow the worker to acquire, at an early stage, the cause of the abnormality that has occurred in the control system.

### <I. Appendix>

The present embodiment as described above includes the following technical ideas.

### [Configuration 1]

An information processing system comprising:
a first acquisition unit (111) configured to acquire first information indicating a state of a control system (1) including a control device (2) in response to an occurrence of a request or an event related to an abnormality that has occurred in the control system;
an abnormality detail determination unit (113) configured to determine details of the abnormality that has occurred on a basis of the first information;
a second acquisition unit (112) configured to request, in accordance with the details of the abnormality, a user to provide second information and acquire the second information from the user;
a cause conjecture unit (114) configured to conjecture a cause of the abnormality that has occurred on a basis of the first information and the second information; and
a notification means (117) configured to notify the user of the conjectured cause of the abnormality.

### [Configuration 2]

The information processing system described above, wherein the first acquisition unit is communicatively connected to the control system and acquires data stored in the control system.

### [Configuration 3]

The information processing system described above, wherein the first acquisition unit acquires the data in a case where a predetermined condition is satisfied.

### [Configuration 4]

The information processing system described above, wherein the first acquisition unit acquires the first information in accordance with an instruction from the user.

### [Configuration 5]

The information processing system described above, further comprising a confirmation unit (115) configured to confirm with the user whether or not the abnormality has been eliminated.

### [Configuration 6]

The information processing system described above, further comprising an additional information acquisition unit (118) configured to request the user to provide additional information and acquire the additional information from the user in a case where it is determined that the abnormality has not been eliminated on the basis of a result of the confirmation made by the confirmation unit, wherein
the cause conjecture unit narrows down and conjectures the cause of the abnormality on a basis of the first information, the second information, and the additional information.

### [Configuration 7]

The information processing system described above, wherein the second information is imaging data.

### [Configuration 8]

The information processing system described above, wherein the second information is information acquired in association with at least one of human's five senses.

### [Configuration 9]

The information processing system described above, further comprising an administrator communication unit (119) configured to provide notification to an administrator and control communication between the administrator and the user in a case where it is determined that the abnormality has not been eliminated on a basis of a result of the confirmation made by the confirmation unit.

### [Configuration 10]

The information processing system described above, wherein
the cause conjecture unit includes a database used for conjecturing the cause of the abnormality, and
the information processing system further includes an administrator input reception unit (116) configured to update the database in accordance with input from the administrator.

### [Configuration 11]

An information processing system control method comprising:
acquiring first information indicating a state of a control system including a control device in response to an occurrence of a request or an event related to an abnormality that has occurred in the control system (Sq2);
determining details of the abnormality that has occurred on a basis of the first information (Sq10);
requesting, in accordance with the details of the abnormality, a user to provide second information and acquiring the second information from the user (Sq12);
conjecturing a cause of the abnormality that has occurred on a basis of the first information and the second information (Sq 18); and
notifying the user of the conjectured cause of the abnormality (Sq20).

It should be understood that the embodiment disclosed herein is illustrative in all respects and not restrictive. The scope of the present disclosure is defined by the claims rather than the above description, and the present disclosure is intended to include the claims, equivalents of the claims, and all modifications within the scope.

### REFERENCE SIGNS LIST

1, 1#, 1P: information processing system, 3: production line, 6: conveyance mechanism, 8: imaging unit, 10, 60: support device, 11, 21, 51: controller, 12, 22, 52: storage unit, 13, 24, 53: communication interface, 14: input device, 15: output device, 16: drive, 23: input/output interface, 50, 50P: server, 91: storage medium, 111: first acquisition unit, 112: second acquisition unit, 113: abnormality detail determination unit, 114: cause conjecture unit, 115: confirmation unit, 116: administrator input reception unit, 117: notification unit, 118: additional information acquisition unit, 119: administrator communication unit, 121: chat program, 221: control program, 222: state data, 223: log data, 300, 500, 600: chat screen

## Claims

1. An information processing system comprising:
a first acquisition unit configured to acquire first information indicating a state of a control system including a control device in response to an occurrence of a request or an event related to an abnormality that has occurred in the control system;
an abnormality detail determination unit configured to determine details of the abnormality that has occurred on a basis of the first information;
a second acquisition unit configured to request, in accordance with the details of the abnormality, a user to provide second information and acquire the second information from the user;
a cause conjecture unit configured to conjecture a cause of the abnormality that has occurred on a basis of the first information and the second information; and
a notification means configured to notify the user of the conjectured cause of the abnormality.

2. The information processing system according to claim 1, wherein the first acquisition unit is communicatively connected to the control system and acquires data stored in the control system.

3. The information processing system according to claim 2, wherein the first acquisition unit acquires the data in a case where a predetermined condition is satisfied.

4. The information processing system according to claim 1, wherein the first acquisition unit acquires the first information in accordance with an instruction from the user.

5. The information processing system according to claim 1, further comprising a confirmation unit configured to confirm with the user whether or not the abnormality has been eliminated.

6. The information processing system according to claim 5, further comprising an additional information acquisition unit configured to request the user to provide additional information and acquire the additional information from the user in a case where it is determined that the abnormality has not been eliminated on a basis of a result of the confirmation made by the confirmation unit, wherein
the cause conjecture unit narrows down and conjectures the cause of the abnormality on a basis of the first information, the second information, and the additional information.

7. The information processing system according to claim 1, wherein the second information is imaging data.

8. The information processing system according to claim 1, wherein the second information is information acquired in association with at least one of human's five senses.

9. The information processing system according to claim 5, further comprising an administrator communication unit configured to provide notification to an administrator and control communication between the administrator and the user in a case where it is determined that the abnormality has not been eliminated on a basis of a result of the confirmation made by the confirmation unit.

10. The information processing system according to claim 9, wherein
the cause conjecture unit includes a database used for conjecturing the cause of the abnormality, and
the information processing system further includes an administrator input reception unit configured to update the database in accordance with input from the administrator.

11. An information processing system control method comprising:
acquiring first information indicating a state of a control system including a control device in response to an occurrence of a request or an event related to an abnormality that has occurred in the control system;
determining details of the abnormality that has occurred on a basis of the first information;
requesting, in accordance with the details of the abnormality, a user to provide second information and acquiring the second information from the user;
conjecturing a cause of the abnormality that has occurred on a basis of the first information and the second information; and
notifying the user of the conjectured cause of the abnormality.
